# EUROPÄISCHE PATENTSCHRIFT

(11) **EP 1 875 120 B1**
(45) Veröffentlichungstag und Bekanntmachung des Hinweises auf die Patenterteilung: **22.07.2009**
(21) Anmeldenummer: 06721202.7
(22) Anmeldetag: 11.04.2006
(51) Int. Cl.: F16L 47/12, F16L 33/22, F16L 37/092

(54) **ANSCHLUSSVORRICHTUNG FÜR EIN KUNSTSTOFFROHR**
CONNECTING DEVICE FOR A PLASTIC PIPE
DISPOSITIF DE RACCORD POUR UN TUBE EN MATIERE PLASTIQUE

(30) Priorität: 26.04.2005 AT 7002005
(43) Veröffentlichungstag der Anmeldung: 09.01.2008
(73) Patentinhaber: KE-KELIT Kunststoffwerk Gesellschaft m.b.H., 4017 Linz (AT)
(72) Erfinder: RAMETSTEINER, Karl, A-4040 Linz (AT)
(74) Vertreter: Hübscher, Helmut
(86) Internationale Anmeldenummer: PCT/AT2006/000144
(87) Internationale Veröffentlichungsnummer: WO 2006/113952

(56) Entgegenhaltungen:
- EP-A- 1 150 056
- CA-A- 1 025 904
- GB-A- 1 421 452

## Beschreibung

### Technisches Gebiet

Die Erfindung bezieht sich auf eine Anschlußvorrichtung für ein Kunststoffrohr, dessen Anschlußende zwischen einer Hülse und einem Anschlußnippel gehalten ist, der einen sich gegen das freie Nippelende hin erweiternden Außenkonus als Gegenkonus für einen axial auf dem Anschlußnippel verschiebbaren, konischen Klemmring bildet, dessen mit dem Innenmantel des Kunststoffrohres zusammenwirkende, widerhakenartige Rückhaltekrallen radial nach außen abstehen.

### Stand der Technik

Um eine Anschlußvorrichtung für ein Kunststoffrohr zu schaffen, die eine zugfeste Klemmung der Anschlußenden von Kunststoffrohren mit einem gegebenen Nenndurchmesser weitgehend unabhängig vom jeweiligen Außendurchmesser gewährleistet, ist es bekannt (EP 1150056 A2), den Innenmantel des Kunststoffrohres mit einem Klemmring zu verkrallen. Zu diesem Zweck wird der geschlitzte, mit Rückhaltekrallen versehene Klemmring auf einem Anschlußnippel gelagert, der einen sich gegen das freie Nippelende hin erweiternden Außenkonus bildet, so daß der Klemmring mit seinem Innenkonus gegen das freie Nippelende hin auf den Außenkonus unter einer entsprechenden Ringerweiterung aufgeschoben werden kann. Wird daher nach einem Aufschieben des Anschlußendes auf den Anschlußnippel über den Klemmring hinweg das Kunststoffrohr einer abziehenden Zugbelastung unterworfen, so dringen die gegen den inneren Rohrmantel vorstehenden, widerhakenartigen Rückhaltekrallen in den Rohrmantel formschlüssig ein, wobei die mit der axialen Ausziehbewegung verbundene Aufweitung des Klemmringes entlang des Gegenkonus eine entsprechende Halterung des Anschlußendes des Kunststoffrohres auf dem Anschlußnippel mit sich bringt, zumal die das Anschlußende im Bereich des Anschlußnippels umschließende Hülse ein unzulässiges Aufweiten des Anschlußendes verhindert, das somit zusätzlich zwischen dem Klemmring und der Hülse einer radialen Klemmung unterworfen wird. Trotz dieser Maßnahmen können die über den Klemmring zwischen der Hülse und dem Anschlußnippel auf das Kunststoffrohr ausgeübten Rückhaltekräfte bei hohen Axialbelastungen unzureichend sein, um ein Ausziehen des Anschlußendes des Kunststoffrohres aus der Anschlußvorrichtung ausschließen zu können.

### Darstellung der Erfindung

Der Erfindung liegt somit die Aufgabe zugrunde, eine Anschlußvorrichtung für ein Kunststoffrohr der eingangs geschilderten Art so zu verbessern, daß auch bei hohen Ausziehkräften das Anschlußende des Kunststoffrohres sicher verankert werden kann.

Die Erfindung löst die gestellte Aufgabe dadurch, daß die Hülse mit dem Außenmantel des Kunststoffrohres zusammenwirkende, radial nach innen vorstehende, widerhakenartige Rückhaltekrallen und zumindest in einem axialen Abschnitt im Bereich des Klemmringes wenigstens einen Längsschlitz aufweist.

Durch die nach innen vorstehenden Rückhaltekrallen wird eine zusätzliche Verankerung des Anschlußendes des Kunststoffrohres in der Anschlußvorrichtung gegen ein Ausziehen erreicht, weil die Rückhaltekrallen aufgrund ihrer Widerhakenform in den Außenmantel des Kunststoffrohres eindringen und über die formschlüssig in den Außenmantel eingedrungenen Rückhaltekrallen eine verstärkte Rückhaltekraft auf das Anschlußende des Kunststoffrohres ausgeübt werden kann, allerdings nur unter der Voraussetzung, daß der Außenmantel nicht beim Einschieben des Anschlußendes zwischen dem Anschlußnippel und der Hülse durch die gegen den Außenmantel vorstehenden Rückhaltezähne der Hülse verletzt wurde. Diese Gefahr besteht aufgrund des im Vergleich zum Innendurchmesser größeren Toleranzbereiches für den Außendurchmesser des Kunststoffrohres insbesondere beim Aufschieben des Anschlußendes auf den konischen Klemmring, der ja eine Aufweitung des aufgeschobenen Anschlußendes bewirkt. Zur Vermeidung einer solchen Verletzung des Außenmantels des Kunststoffrohres ist die Hülse zumindest im Bereich des Klemmringes geschlitzt ausgeführt, so daß die mit ihrem Rücken auf den Außenmantel des Anschlußendes aufgleitenden Rückhaltekrallen vor einem Einschneiden ihres Rückens in den Außenmantel unter einer entsprechenden Aufweitung der Hülse radial ausweichen können. Diese Aufweitmöglichkeit der Hülse beeinträchtigt jedoch das formschlüssige Eindringen der Rückhaltekrallen in den Außenmantel bei einer axialen Belastung in Ausziehrichtung nicht, weil dann die Rückhaltekrallen wegen ihrer Widerhakenform mit der Krallenbrust in den Außenmantel eindringen.

Das durch eine Schlitzung ermöglichte Aufweiten der Hülse darf selbstverständlich die notwendige Klemmung des Anschlußendes des Kunststoffrohres zwischen der Hülse und dem Klemmring nicht gefährden. Aus diesem Grund ist eine axial durchgehend geschlitzte Hülse nachteilig. Besonders vorteilhafte Konstruktionsverhältnisse ergeben sich in diesem Zusammenhang, wenn die Hülse in zumindest zwei aufeinanderfolgenden axialen Abschnitten über den Umfang gleichmäßig verteilte Längsschlitze aufweist, die abschnittsweise gegeneinander winkelversetzt verlaufen. Zwischen den einzelnen axialen Abschnitten bestehenbleibende, geschlossene Umfangsbereiche können unter Umständen die notwendige Aufweitmöglichkeit der Hülse beschränken. Zur Vermeidung einer solchen Beschränkung können die Längsschlitze der Hülse in erweiterten Bohrungen münden, wobei die Bohrungen an den einander zugekehrten Enden der Längsschlitze benachbarter Abschnitte auf einem gemeinsamen Hülsenumfang liegen. Mit dieser Maßnahme wird nicht nur ein vorteilhaftes Aufweitverhalten der Hülse sichergestellt, sondern auch sonst auftretende Kerbwirkungen im Bereich der Enden schmaler Längsschlitze vermieden.

### Kurze Beschreibung der Zeichnung

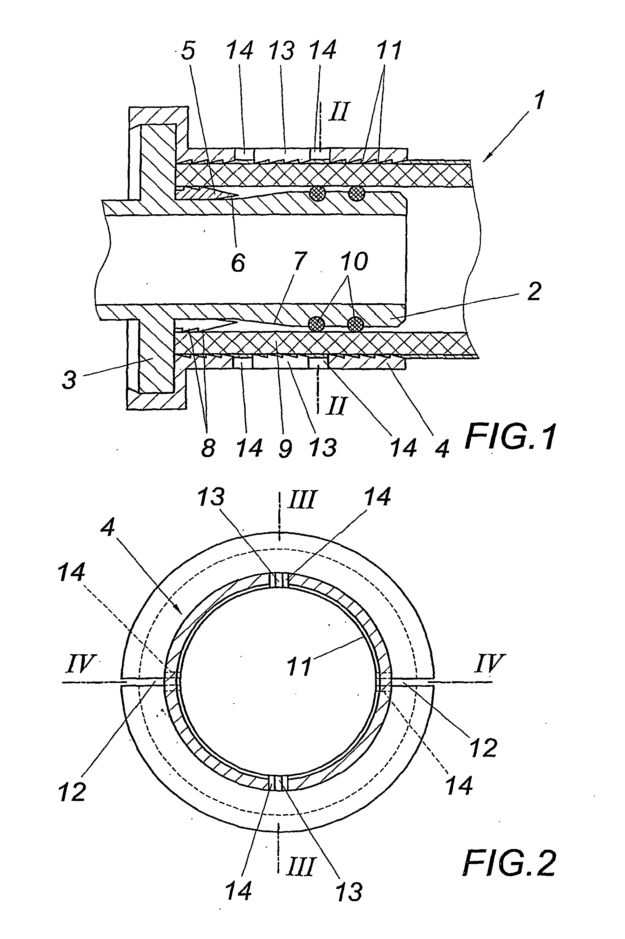

In der Zeichnung ist der Erfindungsgegenstand beispielsweise dargestellt. Es zeigen
- Fig. 1: eine erfindungsgemäße Anschlußvorrichtung für ein Kunststoffrohr in einem vereinfachten Längsschnitt,
- Fig. 2: die das Anschlußende des Kunststoffrohres umschließende Hülse in einem Schnitt nach der Linie II-II der Fig. 1,

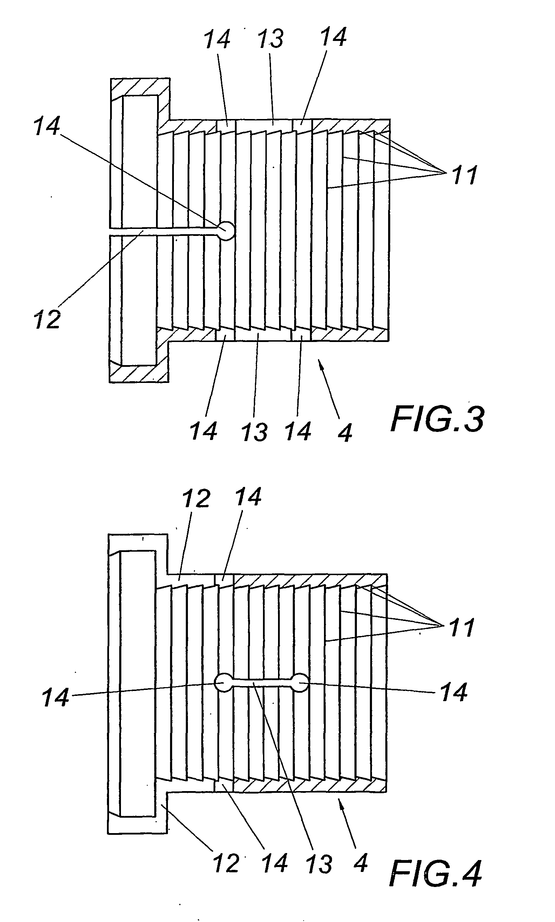

- Fig. 3: einen Schnitt nach der Linie III-III der Fig. 2 und
- Fig. 4: einen Schnitt nach der Linie IV-IV der Fig. 2.

### Weg zur Ausführung der Erfindung

Die dargestellte Anschlußvorrichtung für ein Kunststoffrohr 1 weist einen metallischen Anschlußnippel 2 mit einem gegenüber dem freien Nippelende zurückversetzten Anschlagflansch 3 auf, der beispielsweise schnappverschlußartig von einer den Anschlußnippel 2 mit Abstand konzentrisch umschließenden Hülse 4 übergriffen wird. Auf dem Anschlußnippel 2 ist eine geschlitzte Klemmhülse 5 axial verschiebbar gelagert, die mit einem sich gegen das freie Nippelende hin erweiternden Innenkonus 6 versehen ist. Dieser Innenkonus 6 wirkt mit einem Gegenkonus 7 zusammen, der als sich gegen das freie Nippelende hin erweitender Außenkonus am Anschlußnippel 2 ausgeformt ist. Auf der dem Innenkonus 6 gegenüberliegenden Außenseite des Klemmringes 5 sind widerhakenartige Rückhaltekrallen 8 vorgesehen, die sich radial nach außen gegen das zwischen der Hülse 4 und dem Anschlußnippel 2 gegen den Anschlagflansch 3 vorgeschobene Anschlußende 9 des Kunststoffrohres 1 erstrecken.

Die flüssigkeitsdichte Verbindung zwischen dem Kunststoffrohr 1 und dem Anschlußnippel 1 wird durch Ringdichtungen 10 sichergestellt.

Wird das Anschlußende 9 des Kunststoffrohres 1 auf dem Anschlußnippel 2 bis zum stirnseitigen Anschlag am Anschlagflansch 3 aufgeschoben, so wird das Anschlußende 9 des Kunststoffrohres 1 auch über den Klemmring 5 und dessen Rückhaltekrallen 8 geschoben, wobei sich der Klemmring 5 bei seiner im Ausführungsbeispiel vorgesehenen freien axialen Verschiebbarkeit zwischen dem Anschlagflansch 3 und dem Gegenkonus 7 am Anschlagflansch 3 abstützt. Wegen der guten Maßhaltigkeit des Kunststoffrohres 1 im Bereich des auf den Strömungsquerschnitt bezogenen Nenndurchmessers kann mit einer sicheren Mitnahme des Klemmringes 5 über die Rückhaltekrallen 8 gerechnet werden, wenn das Kunststoffrohr 1 in Abziehrichtung einer Zugbelastung unterworfen wird. Diese Abziehbewegung schiebt den Klemmring 5 mit seinem Innenkonus 6 auf den Gegenkonus 7 auf, so daß der Klemmring 5 aufgeweitet wird, was mit einer festen Verkrallung zwischen dem Klemmring 5 und dem Anschlußende 9 des Kunststoffrohres 1 einhergeht.

Um die Verankerung des Kunststoffrohres 1 in der Anschlußvorrichtung gegenüber einem Ausziehen zu verbessern, wird die Hülse 4 auf ihrer Innenseite ebenfalls mit widerhakenförmigen Rückhaltekrallen 11 versehen, die bei einer Ausziehbewegung des Anschlußendes 9 des Kunststoffrohres 1 in den gegebenenfalls bewehrten Außenmantel des Kunststoffrohres 1 eindringen, insbesondere wenn beim Auflaufen des Klemmringes 5 auf den Gegenkonus 7 das Anschlußende 9 radial nach außen gegen die Hülse 4 gedrängt wird. Voraussetzung für eine entsprechende Verbesserung der Verankerung des Kunststoffrohres 1 in der Anschlußvorrichtung ist allerdings, daß der Außenmantel beim Einführen des Anschlußendes 9 zwischen dem Anschlußnippel 2 und der Hülse 4 nicht durch die Rückhaltekrallen 11 der Hülse 4 verletzt wird. In diesem Zusammenhang ist zu bedenken, daß der Außendurchmesser von Kunststoffrohren gleichen Nenndurchmessers in einem größeren Toleranzbereich Schwankungen unterworfen ist, so daß die Gefahr einer Verletzung des Außenmantels des Kunststoffrohres 1 beim Einführen des Anschlußendes 9 in die Anschlußvorrichtung nicht von der Hand zu weisen ist. Um eine solche Verletzungsgefahr des Außenmantels zu vermeiden, ist die Hülse 4 ausgehend von ihrer dem Anschlagflansch 3 zugekehrten Stirnseite mit Längsschlitzen 12, 13 versehen. Diese einander paarweise diametral gegenüberliegenden Längsschlitze 12, 13 sind in zwei axialen Abschnitten der Hülse 4 vorgesehen, und zwar im Wirkungsbereich der Klemmhülse 5, wobei die Anordnung so getroffen ist, daß die Längsschlitze 12 des einen axialen Abschnittes gegenüber den Längsschlitzen 13 des anschließenden Abschnittes der Hülse 4 um 90° winkelversetzt verlaufen. Die Längsschlitze 12 münden in erweiterten Bohrungen 14, um Kerbwirkungen im Bereich der Schlitzenden zu vermeiden. Die erweiterten Bohrungen 14 der einander zugekehrten Enden der Längsschlitze 12, 13 benachbarter Hülsenabschnitte liegen auf einem gemeinsamen Hülsenumfang, was hinsichtlich der durch die gewählte Anordnung der Längsschlitze 12, 13 ermöglichte Aufweitung der Hülse 4 im Bereich der Klemmhülse 5 vorteilhafte Voraussetzungen für das Einführen des Anschlußendes 9 des Kunststoffrohres 1 zwischen dem Anschlußnippel 2 und der Hülse 4 schafft, ohne eine Verletzungsgefahr des Außenmantels des Kunststoffrohres 1 durch die Rückhaltekrallen 11 der Hülse 4 befürchten zu müssen. Die auf den Außenmantel des Kunststoffrohres 1 aufgleitenden Rücken der Rückhaltekrallen 11 können aufgrund der durch die Längsschlitze 12, 13 möglichen Hülsenaufweitung ausreichend radial nach außen ausweichen, um ein Einschneiden in den Außenmantel des Kunststoffrohres 1 zu vermeiden, wenn das Anschlußende 9 auf den Klemmring 5 aufgeschoben wird. Da im Falle eines Ausziehens des Kunststoffrohres 1 aus der Anschlußvorrichtung die Rückhaltekrallen 11 mit ihrer steilen Brust auf den Außenmantel des Kunststoffrohres einwirken, bleiben die radial nach außen gerichteten Kraftkomponenten beschränkt, so daß trotz der Schlitzung der Hülse 4 eine formschlüssige Verkrallung zwischen der Hülse 4 und dem Außenmantel des Kunststoffrohres 1 durch die Rückhaltekrallen 11 sichergestellt wird.

## Patentansprüche

1. Eine Hülse (4) und eine Anschlußnippel (2) aufweisende Anschlußvorrichtung für ein Kunststoffrohr, dessen Anschlußende zwischen der Hülse (4) und dem Anschlußnippel (2) gehalten ist, der einen sich gegen das freie Nippelende hin erweiternden Außenkonus als Gegenkonus (7) für einen axial auf dem Anschlußnippel verschiebbaren, konischen Klemmring (5) bildet, dessen mit dem Innenmantel des Kunststoffrohres zusammenwirkende, widerhakenartige Rückhaltekrallen (8) radial nach außen abstehen, **dadurch gekennzeichnet, daß** die Hülse (4) mit dem Außenmantel des Kunststoffrohres (1) zusammenwirkende, radial nach innen vorstehende, widerhakenartige Rückhaltekrallen (11) und zumindest in einem axialen Abschnitt im Bereich des Klemmringes (5) wenigstens einen Längsschlitz (12, 13) aufweist.

2. Anschlußvorrichtung nach Anspruch 1, **dadurch gekennzeichnet, daß** die Hülse (4) in zumindest zwei aufeinanderfolgenden axialen Abschnitten über den Umfang gleichmäßig verteilte Längsschlitze (12, 13) aufweist, die abschnittsweise gegeneinander winkelversetzt verlaufen.

3. Anschlußvorrichtung nach Anspruch 2, **dadurch gekennzeichnet, daß** die Längsschlitze (12, 13) der Hülse (4) in erweiterten Bohrungen (14) münden, wobei die Bohrungen (14) an den einander zugekehrten Enden der Längsschlitze (12, 13) benachbarter Abschnitte auf einem gemeinsamen Hülsenumfang liegen.

## Claims

1. Connecting device for a synthetic material pipe, which device comprises a sleeve (4) and a connecting fitting (2) and whose connecting end is held between the sleeve (4) and the connecting fitting (2) which forms an outer cone, expanding towards the free fitting end, as a counter cone (7) for a conical clamping ring (5) which can be displaced axially on the connecting fitting, wherein the barb-like retaining claws (8) of the clamping ring which co-operate with the inner lining of the synthetic material pipe protrude radially outwardly, **characterised in that** the sleeve (4) comprises barb-like retaining claws (11), which co-operate with the outer lining of the synthetic material pipe (1) and protrude radially inwardly, and comprises at least in an axial section in the region of the clamping ring (5) at least one longitudinal slot (12, 13).

2. Connecting device as claimed in Claim 1, **characterised in that** the sleeve (4) comprises longitudinal slots (12, 13) in at least two successive axial sections, which slots are uniformly distributed over the periphery and extend in sections in an angularly offset manner with respect to each other.

3. Connecting device as claimed in Claim 2, **characterised in that** the longitudinal slots (12, 13) of the sleeve (4) open into expanded bores (14), wherein the bores (14) are located on a common sleeve periphery at the mutually facing ends of the longitudinal slots (12, 13) of adjacent sections.

## Revendications

1. Dispositif de raccordement présentant une douille (4) et un embout de raccordement (2) pour un tube en matière plastique, dont l'extrémité de raccordement est maintenue entre la douille (4) et l'embout de raccordement (2) formant un cône extérieur, allant en s'élargissant en évoluant vers l'extrémité d'embout libre, en tant que contre cône (7) pour une bague de serrage (5) conique, déplaçable axialement sur l'embout de raccordement, bague de serrage dont des griffes de retenue (8) en forme de contre-crochets, coopérant avec l'enveloppe intérieure du tube en matière plastique, font saillie radialement vers l'extérieur, **caractérisé en ce que** la douille (4) présente des griffes de retenue (11) en forme de contre-crochets, faisant saillie radialement vers l'intérieur, coopérant avec l'enveloppe extérieure du tube en matière plastique (1) et, au moins dans un tronçon axial, dans la zone de la bague de serrage (5), au moins une fente longitudinale (12, 13).

2. Dispositif de raccordement selon la revendication 1, **caractérisé en ce que** la douille (4) présente, en au moins deux tronçons axiaux successifs, des fentes longitudinales (12, 13) réparties régulièrement sur la périphérie et s'étendant de façon mutuellement décalée angulairement par tronçons.

3. Dispositif de raccordement selon la revendication 2, **caractérisé en ce que** les fentes longitudinales (12, 13) de la douille (4) débouchent dans des perçages (14) élargis, lesdits perçages (14) étant situés sur une périphérie de douille commune, aux extrémités, tournées l'une vers l'autre, des fentes longitudinales (12, 13) de tronçons voisins.
